# EUROPÄISCHE PATENTSCHRIFT

(11) **EP 4 308 872 B1**
(45) Veröffentlichungstag und Bekanntmachung des Hinweises auf die Patenterteilung: **25.02.2026**
(21) Anmeldenummer: 22713846.8
(22) Anmeldetag: 18.03.2022
(51) Int. Cl.: F28D 20/00

(54) **VORRICHTUNG ZUR SPEICHERUNG THERMISCHER ENERGIE**
DEVICE FOR STORING THERMAL ENERGY
DISPOSITIF DU STOCKAGE THERMIQUE

(30) Priorität: 19.03.2021 AT 501862021
(43) Veröffentlichungstag der Anmeldung: 24.01.2024
(73) Patentinhaber: AEE - Institut für Nachhaltige Technologien, 8200 Gleisdorf (AT)
(72) Erfinder: RIEGLER, Thomas, 8020 Graz (AT); REISENBICHLER-SOMMERHOFER, Michael, 8211 Prebensdorf (AT)
(74) Vertreter: Hübscher & Partner Patentanwälte GmbH
(86) Internationale Anmeldenummer: PCT/AT2022/060080
(87) Internationale Veröffentlichungsnummer: WO 2022/192932

(56) Entgegenhaltungen:
- WO-A1-00/46128
- DE-A1- 2 501 061
- US-A- 4 159 736
- US-A- 4 429 683

## Beschreibung

### Technisches Gebiet

Die Erfindung bezieht sich auf eine Vorrichtung zur Speicherung thermischer Energie mit einem Becken, das einen mit einer Speicherflüssigkeit gefüllten und mit einer Isolationsschicht abgedeckten Speicherbereich aufweist.

### Stand der Technik

Aus dem Stand der Technik sind Vorrichtungen zum Speichern thermischer Energie bekannt, bei denen Wasser als Energiespeichermedium verwendet wird. Dabei wird das Wasser in einem Becken gelagert und mit einer Isolationsschicht bedeckt, um Wärmeübertragung vom Wasser auf die Umgebung, insbesondere die Umgebungsluft, zu verringern. Der Vorrichtung kann thermische Energie zugeführt, bzw. entnommen werden, indem Wasser in bzw. aus dem Becken gepumpt wird. Die DK201870618A1 zeigt beispielsweise eine solche Vorrichtung zum Speichern thermischer Energie, bei der auf der Isolationsschicht eine zusätzliche Ballastschicht vorgesehen ist. Durch diese Ballastschicht bildet sich ein Gefälle auf der Isolationsschicht aus, die die Entwässerung und Entlüftung erleichtert. Diese Vorrichtung umfasst des Weiteren Instandhaltungssysteme zur Entlüftung und Entwässerung. Die US4159736 A zeigt eine weitere Speichereinrichtung mit einem Becken gemäß dem Oberbegriff von Anspruch 1.

Nachteilig am Stand der Technik ist allerdings, dass die Entlüftung und die Entwässerung unmittelbar auf der Isolationsschicht mittels wartungsaufwändiger Instandhaltungssysteme durchgeführt werden muss. Die Gewichtskraft, hervorgerufen durch diese Instandhaltungssysteme, die Ballastschicht und etwaiges Regenwasser wird ungleichmäßig auf die Isolationsschicht ausgeübt, wodurch es zu Verformungen und Spannungen kommt und konstruktive Schwächungen entstehen. Dies erhöht den Wartungsaufwand zusätzlich. Aus demselben Grund kann die üblicherweise sehr große Oberfläche der Vorrichtung nicht weiter genutzt werden, weswegen die Vorrichtung bevorzugt außerhalb des innerstädtischen bzw. stadtnahen Raums installiert wird. Dies resultiert allerdings in weiteren Wärmeverlusten beim Transport des Wassers als Wärmeträgermedium von der Speichervorrichtung zu den Wärmeabnehmern. Außerdem müssen wärmeresistente Schwimmer für die Isolationsschicht vorgesehen sein, die der dauerhaften Temperaturbelastung, hervorgerufen durch das Wasser, widerstehen können.

### Darstellung der Erfindung

Der Erfindung liegt somit die Aufgabe zugrunde, eine Vorrichtung zum Speichern thermischer Energie so auszugestalten, dass Instandhaltungsarbeiten und die Materialbelastung der beteiligten Komponenten minimiert wird, die Oberfläche der Vorrichtung aber trotzdem einer Sekundärnutzung zugeführt werden kann.

Die Erfindung löst die gestellte Aufgabe dadurch, dass die Isolationsschicht höhenverstellbar am Becken gelagert ist und die Isolationsschicht die Speicherflüssigkeit flüssigkeitsdicht von einem oberhalb der Isolationsschicht angeordneten, mit der Isolationsschicht heb- und senkbaren Nutzschicht trennt. Die Isolationsschicht trennt das Becken in zwei räumliche Bereiche und bildet zwischen diesen Bereichen eine flüssigkeitsdichte Barriere, wobei der untere Speicherbereich als thermischer Speicher ausgeführt ist. Dieser Speicherbereich kann auch mehrere Schichten von Speicherflüssigkeit aufweisen, die voneinander abgetrennt sein können. In einer bevorzugten Ausführungsform kann die Isolationsschicht nicht nur flüssigkeitsdicht ausgebildet sein, sondern auch eine thermische Barriere bilden. Wird der Speicherflüssigkeit Wärmeenergie entnommen oder zugeführt, ändert sich dessen Temperatur. Dies resultiert in einer Änderung des von der Speicherflüssigkeit eingenommenen Volumens und des Füllstands. Dadurch, hebt, bzw. senkt sich die Isolationsschicht mit dem Füllstand, wodurch die Entstehung von Unterdrücken und/oder die Bildung einer Luftschicht vermieden werden und die Isolationsschicht immer sowohl mit der Speicherflüssigkeit als auch mit der Nutzschicht in unmittelbarem Kontakt steht.

So können sich bei Wasser als Speicherflüssigkeit allein durch Temperaturänderungen abhängig von der Größe und Geometrie der Vorrichtung Füllniveauänderungen von einigen Metern ergeben. Eine Füllniveauänderung im Speicherbereich ergibt sich allerdings nicht nur aufgrund der Wärmezu- und abfuhr, sondern auch durch die Beschickung mit oder Entnahme von Speicherflüssigkeit, diese kann aber erfindungsgemäß analog zu einer wärmebedingten Änderung kompensiert werden. Bei entsprechender Dimensionierung der Isolationsschicht und ausreichend hohem Volumen bzw. Gewicht der Nutzschicht ist der von der Nutzschicht über die Isolationsschicht auf die Speicherflüssigkeit applizierte Druck so hoch, dass die Speicherflüssigkeit längerfristig in flüssigem Aggregatzustand verbleibt, jedoch über den Siedepunkt bei Atmosphärendruck erhitzt werden kann. Da die Isolationsschicht naturgemäß eine große Oberfläche aufweist, kann sie zur einfacheren Assemblierung und zur einfacheren Instandhaltung aus einzelnen Modulen zusammengesetzt sein. Der maximal notwendige Hub der Isolationsschicht ergibt sich unter anderem aus der Geometrie und dem Volumen des Beckens und kann von einem Fachmann einfach ermittelt werden. In einer bevorzugten Ausführungsform kann die Isolationsschicht nicht nur flüssigkeitsdicht, sondern auch dampfdicht sein. Als Nutzschicht kann beispielsweise eine Erdschüttung vorgesehen sein, die so vom Rand des Beckens beabstandet ist, dass sie mit der Isolationsschicht heb- und senkbar ist.

Damit die Gewichtsbelastung homogen auf die Isolationsschicht verteilt und die statischen Eigenschaften der Vorrichtung verbessert werden können, wird vorgeschlagen, dass die Nutzschicht ein Gewässer ist. Da Speicherflüssigkeit und Gewässer von der Isolationsschicht voneinander flüssigkeitsdicht getrennt werden, wirkt kein Auftrieb auf die Isolationsschicht, was wiederum die höhenverstellbare Lagerung vereinfacht. Darüber hinaus können durch ein Gewässer als Nutzschicht Zonen stärkerer Beanspruchung vermieden werden. Das Gewässer oberhalb der Isolationsschicht schützt die Isolationsschicht vor schädlichen Umwelteinflüssen wie Frost, Hagel, etc. und macht darüber hinaus die Verwendung der normalerweise erforderlichen Entwässerungsanlagen hinfällig. Das Gewässer kann dabei ein stilles Gewässer, wie beispielsweise ein Teich oder ein See, oder ein fließendes Gewässer, wie ein Bach oder Fluss sein. Das Gewässer kann in weiterer Folge einer Sekundärnutzung, beispielsweise für schwimmende Photovoltaik-Anlagen, oder als Fischteich, zugeführt werden. Temporäre kleinere Wasseransammlungen, wie beispielsweise Regenpfützen, werden dabei ausdrücklich nicht als Gewässer im Sinne der Erfindung angesehen. Die Verwendung eines Gewässers als Nutzschicht hat zudem den Vorteil, dass das Volumen bzw. das Gewicht der Nutzschicht in einfacher Weise durch die Höhe der Wassersäule des Gewässers über der Isolationsschicht vorgegeben werden kann.

Ändert sich die Temperatur der Speicherflüssigkeit, kann Luft aus der Speicherflüssigkeit ausgasen und sich unmittelbar unterhalb der Isolationsschicht ansammeln. Dies bewirkt eine ungleichmäßige Druckbelastung der Isolationsschicht und lokal erhöhten Verschleiß. Eindringende Luft kann allerdings effizient entfernt werden, wenn im Bereich der Lagerung der Isolationsschicht eine Entlüftung für den Speicherbereich vorgesehen ist. Da die Druckbelastung durch die Nutzschicht, insbesondere durch das Gewässer naturgemäß homogen auf der Oberfläche der Isolationsschicht verteilt ist, können langlebige Lufttaschen fern der Randbereiche vermieden und einfach randseitig abgeleitet werden. Deswegen kann die Entlüftung bevorzugt im höchsten Punkt des Bereichs der Lagerung vorgesehen sein, um eine effiziente Entlüftung der gesamten dem Speicherbereich zugewandten Seite der Isolationsschicht zu ermöglichen. Zur randseitigen Ableitung von Lufttaschen kann die Isolationsschicht beispielsweise zur Entlüftung führende Rillen aufweisen.

Die Wassermenge eines Gewässers als Nutzschicht kann sich beispielsweise durch Umwelteinflüsse reduzieren. Sinkt dadurch der Wasserstand des Gewässers unter einen Mindeststand, kann dessen Sekundärnutzung, sowie die Schutzfunktion für die Isolationsschicht nicht mehr gewährleistet werden. Um die Wassermenge des Gewässers regulieren zu können, wird daher vorgeschlagen, dass oberhalb der Isolationsschicht ein Gewässerzufluss vorgesehen ist. Dadurch ist die ausreichende Befüllung des Gewässers unabhängig von Wettereinflüssen wie Regen, Schnee, Wind, etc. möglich. Zusätzlich lässt sich die Wassermenge des Gewässers regulieren und an die Beckengröße und den Füllstand des Speicherbereichs anpassen. Als zusätzliche Funktion kann mit kontrollierter Wasserzufuhr über den Gewässerzufluss auch die Schichtdicke des Gewässers beeinflusst werden, um beispielsweise die Wärmedämmeigenschaften des Gewässers zu erhöhen und so Wärmeverluste zu senken.

Verfügt das Becken nicht über ausreichend Volumen um das Gewässer aufzunehmen, besteht die Gefahr eines unkontrollierten Überlaufens. Dadurch können Schäden in der unmittelbaren Umgebung der Vorrichtung und Einschränkungen hinsichtlich des Sekundärnutzens des Gewässers entstehen. Unkontrolliertes Überlaufen kann allerdings verhindert werden, wenn an einer vorgegebenen Beckenhöhe ein Gewässerüberlauf vorgesehen ist. Dieser Gewässerüberlauf kann im einfachsten Fall ein abfallender offener oder geschlossener Kanal oder Bereich sein. Erreicht der Wasserstand die Höhe dieses Gewässerüberlaufs, wird überschüssiges Wasser aufgrund der Schwerkraft abgeleitet. Zu diesem Zweck kann der Gewässerüberlauf ein entsprechendes Gefälle aufweisen. Gemeinsam mit dem Gewässerzulauf kann somit der Füllstandspegel des Gewässers auf ein für die Vorrichtung geeignetes Niveau eingestellt und langfristig gehalten werden.

Eine besonders bevorzugte Möglichkeit, die Isolationsschicht in Abhängigkeit des Speicherflüssigkeitsstandes zu heben bzw. zu senken besteht darin, dass die Isolationsschicht über eine Faltenbalgkonstruktion höhenverstellbar am Becken gelagert ist. Die Faltenbalgkonstruktion kann beispielsweise aus Edelstahl- oder Kunststoffabdichtungsbahnen gebildet sein und wird dicht an die Speicherwand angeschlossen. Dadurch, dass die Faltenbalgkonstruktion im Wesentlichen festpunktfrei gelagert ist, können auch thermisch induzierte Spannungen gut kompensiert werden. Um der Konstruktion zusätzliche Sicherheit im Falle etwaiger undichter Stellen zu verschaffen, kann der Faltenbalg zumindest zweilagig ausgeführt sein, sodass mehrere Abdichtungsebenen bereitgestellt werden. Der Zwischenraum der einzelnen Lagen der Faltenbalgkonstruktion ist mit Dämmstoff, beispielsweise Luft, gefüllt und erfüllt damit eine zusätzliche wärmedämmende Funktion, insbesondere dann, wenn am Faltenbalg zusätzliche Konvektionsbremsen vorgesehen sind. Um Druckschwankungen im luftgefüllten Faltenbalgzwischenraum zu kompensieren, die auf Bewegungen zufolge der Speicherpegelschwankungen zurückzuführen sind, kann die Faltenbalgkonstruktion auch eine Entlüftung aufweisen. Für günstige konstruktive Bedingungen kann die Entlüftung im Bereich der Isolationsschicht angeordnet sein, sodass eine gemeinsame Entlüftung für sowohl die Faltenbalgkonstruktion als auch für den Speicherbereich selbst bereitgestellt wird, weil dann sich gegebenenfalls unter der Isolationsschicht ansammelnde Lufttaschen problemlos mitentfernt werden können. In einer bevorzugten Ausführungsform kann der Faltenbalg nicht nur Füllstandsschwankungen kompensieren, sondern auch Kräfte parallel zur Oberfläche der Nutzschicht bzw. des Gewässers, wie sie beispielsweise durch eine Temperaturänderung der Speicherflüssigkeit auftreten können, aufnehmen. Dazu kann der Faltenbalg beispielsweise schwimmend gelagert sein, oder so ausgeführt sein, dass er auch begrenzten Bewegungsspielraum parallel zur Oberfläche der Nutzschicht bzw. des Gewässersaufweist.

In einer bevorzugten Ausführungsform kann die höhenvertellbare Lagerung der Isolationsschicht am Becken und/oder die Isolationsschicht selbst mehrlagig ausgebildet sein. Durch die mehrlagige Ausbildung können die äußeren Schichten Opferschichten bilden, sodass die Lagerung und/oder die Isolationsschicht trotz der aufgrund der hohen Temperaturen beschleunigten Degradierung eine längere Standzeit erreichen. Dies gilt insbesondere für den Fall, dass die Lagerung und/oder die Isolationsschicht aus Kunststoff besteht oder eine äußere Kunststoffschicht aufweist. Eine mehrlagige Ausbildung empfiehlt sich insbesondere bei der Lagerung der Isolationsschicht am Becken, da diese Lagerung, die vorzugsweise ein Faltenbalg sein kann, flexibel ausgestaltet sein muss.

Setzt sich die Isolationsschicht aus einzelnen Modulen zusammen, ergeben sich besonders vorteilhafte Konstruktions- und Energiespeicherbedingungen, wenn die einzelnen Module jeweils einen mit einem Dämmmaterial verfüllten Rahmen umfassen. Zufolge dieser Merkmale werden trotz der modularen Bauweise der Isolationsschicht Wärmebrücken reduziert, welche ansonsten der Energieeffizienz der erfindungsgemäßen Vorrichtung abträglich wären. Über die Rahmen können die einzelnen Module miteinander verbunden werden. In einer bevorzugten Ausführungsform der Erfindung sind die Module miteinander flexibel über ihre Rahmen verbunden, damit die Isolationsschicht Kräfte parallel und quer zur Flüssigkeitsoberfläche besser aufnehmen kann. Der Rahmen muss flüssigkeitsdicht sein, dazu kann er beispielsweise aus Metall, bevorzugter Weise aus Edelstahlblechen, oder aus einem Polymer gefertigt sein. Als Dämmmaterial können beispielsweise PU-Schäume, Glasschaumschotter oder ähnliches eingesetzt werden.

Die Erfindung bezieht sich auch auf ein Verfahren zur Herstellung einer erfindungsgemäßen Vorrichtung. Dabei wird das Becken mit einer Flüssigkeit, beispielsweise mit der Speicherflüssigkeit, befüllt, auf deren Flüssigkeitsoberfläche die miteinander verbundenen Module der Isolationsschicht aufgebracht werden. Anschließend wird die Flüssigkeitsoberfläche auf die Höhe des Speicherbereichs abgesenkt, die Isolationsschicht höhenverstellbar am Becken gelagert und der Beckenbereich oberhalb der Isolationsschicht unter Ausbildung einer Nutzschicht, beispielsweise eines Gewässers, befüllt. Ein jeweiliges Modul befindet sich somit zunächst auf einer zum Becken führenden Förderbahn und wird über einer Montagegrube positioniert. Über der Montagegrube werden die Module bzw. Modulverbindungen in mehrlagiger Ausführung dicht miteinander verbunden, beispielsweise verschweißt. Nach Fertigstellung der Schweißarbeiten werden die Module weiter in Richtung Flüssigkeitsoberfläche gezogen, beispielsweise unter Zuhilfenahme von Seilwinden. Dabei ist eine temporäre Flutung des gesamten Beckens erforderlich, nämlich über dem Speicherbereichniveau. Beim Erreichen der Flüssigkeitsoberfläche werden die Module mittels Montagekonsolen gestützt, um Beschädigungen zu vermeiden. Nachdem alle Module zu einem Stück verbunden wurden und auf der Flüssigkeitsoberfläche schwimmen, wird die so gebildete Isolationsschicht zur Beckenmitte hin ausgerichtet und der Füllstand des Speicherbereichs auf die erforderliche Höhe abgesenkt. Zur höhenverstellbaren Lagerung der Isolationsschicht am Becken kann eine Faltenbalgkonstruktion vorgesehen sein, die dicht sowohl am Beckenrand als auch an der Isolationsschicht angesetzt ist. Anschließend kann das Oberwasser kontrolliert eingefüllt werden, sodass sich ein Gewässer oberhalb der Isolationsschicht ausbildet.

### Kurze Beschreibung der Erfindung

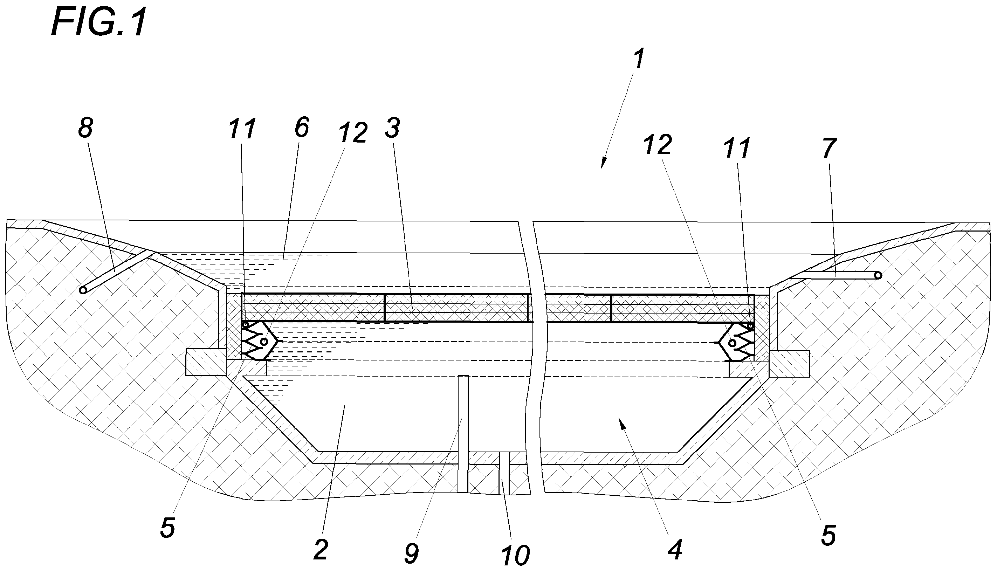

In der Zeichnung ist der Erfindungsgegenstand beispielsweise dargestellt. Es zeigen
- Fig. 1: einen schematischen Schnitt durch eine erfindungsgemäße Vorrichtung und
- Fig. 2: eine schematische Darstellung zur Veranschaulichung eines Verfahrens zur Herstellung einer erfindungsgemäßen Vorrichtung auf Basis einzelner Isolationsschicht-Module.

### Wege zur Ausführung der Erfindung

Eine erfindungsgemäße Vorrichtung zur Speicherung thermischer Energie umfasst ein nach oben offenes Becken 1, das einen mit einer Speicherflüssigkeit 2 gefüllten und mit einer Isolationsschicht 3 abgedeckten Speicherbereich 4 aufweist. Die Isolationsschicht 3 ist über eine Faltenbalgkonstruktion 5 höhenverstellbar am Becken 1 gelagert und trennt die Speicherflüssigkeit 2 flüssigkeitsdicht von einer oberhalb der Isolationsschicht 3 angeordneten Nutzschicht, vorzugsweise von einem Gewässer 6. Das Gewässer 6 kann dabei ein stilles Gewässer, wie beispielsweise ein Teich oder ein See, oder ein fließendes Gewässer, wie ein Bach oder Fluss sein und somit einer Sekundärnutzung, beispielsweise für schwimmende Photovoltaik-Anlagen, oder als Fischteich, zugeführt werden. Um die Wassermenge des Gewässers 6 regulieren zu können, ist oberhalb der Isolationsschicht 3 sowohl ein Gewässerzufluss 7, als auch ein Gewässerüberlauf 8 vorgesehen. Der Flüssigkeitsstand der Speicherflüssigkeit 2 sowie dessen Temperatur kann hingegen über einen Speicherzufluss 9 sowie einen Speicherabfluss 10 eingestellt werden. Der Flüssigkeitsstand der Speicherflüssigkeit 2 kann sich auch ändern, wenn der Speicherflüssigkeit 2 Wärme über Wärmetauscher (in der Zeichnung nicht dargestellt) entnommen wird.

Um etwaige durch Ausgasen der Speicherflüssigkeit 2, oder beim Befüllen oder Entleeren des Speicherbereichs 4 anfallende Luft zuverlässig abzuführen, die unter Umständen zur Ausbildung von sich unter der Isolationsschicht 3 ansammelnden Lufttaschen führen kann, ist im Bereich der Lagerung der Isolationsschicht 3 eine Entlüftung 11 für den Speicherbereich 4 vorgesehen. Diese Entlüftung 11 ist aus Übersichtsgründen lediglich als Kreisquerschnitt angedeutet. Es versteht sich allerdings von selbst, dass eine derartige Entlüftung 11 eine nicht näher dargestellte Entlüftungsleitung umfassen kann, die vom Speicherbereich 4 wegführt. Obwohl die Entlüftung 11 grundsätzlich als gemeinsame Entlüftung für sowohl den Speicherbereich 4, als auch für die Faltenbalgkonstruktion 5 dienen kann, ist im vorliegenden Ausführungsbeispiel auch eine gesonderte Entlüftung 12 für die Faltenbalgkonstruktion 5 vorgesehen.

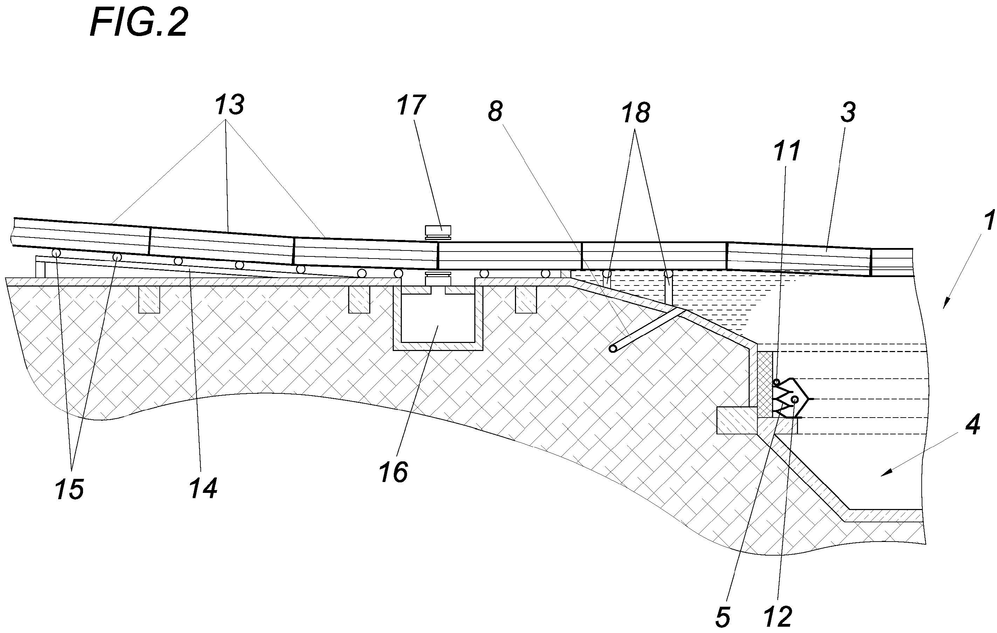

Mit Blick auf Fig. 2 wird ein Verfahren zur Herstellung einer erfindungsgemäßen Vorrichtung erläutert. Das Becken 1 wird dabei mit einer Flüssigkeit befüllt, sodass die Flüssigkeitsoberfläche oberhalb der Höhe des Speicherbereiches 4 liegt. Zur Bildung der Isolationsschicht 3 können mehrere einzelne Module 13 vorgesehen sein. Die Module 13 werden auf einer Förderbahn 14 zum Becken 1 geführt und beispielsweise über Montagerollen 15 sowie nicht näher dargestellte Montageunterlagen befördert. Über einer Montagegrube 16 werden die Module 13 beispielsweise mithilfe einer Schweißvorrichtung 17 dicht miteinander verbunden. Die Module 13 werden anschließend weiter in Richtung Flüssigkeitsoberfläche gezogen, beispielsweise unter Zuhilfenahme von Seilwinden. Beim Erreichen der Flüssigkeitsoberfläche werden die Module 13 mittels Montagekonsolen 18 gestützt, um Beschädigungen zu vermeiden. Erst nach dem Erreichen der Module 13 der Flüssigkeitsoberfläche werden die temporären Montageunterlagen unter den Modulen 13 entfernt, sodass die Module 13 auf der Flüssigkeitsoberfläche aufschwimmen. Nachdem alle Module 13 miteinander verbunden wurden und auf der Flüssigkeitsoberfläche schwimmen, wird die so gebildete Isolationsschicht 3 zur Beckenmitte hin ausgerichtet und der Füllstand des Speicherbereichs 4 auf die erforderliche Höhe abgesenkt. Danach wird die Isolationsschicht 3 mit der Faltenbalgkonstruktion 5 flüssigkeitsdicht verbunden und das Oberwasser kann kontrolliert eingefüllt werden, sodass sich ein Gewässer 6 oberhalb der Isolationsschicht 3 ausbildet.

## Patentansprüche

1. Vorrichtung zur Speicherung thermischer Energie mit einem Becken (1), das einen mit einer Speicherflüssigkeit (2) gefüllten und mit einer Isolationsschicht (3) abgedeckten Speicherbereich (4) aufweist, **dadurch gekennzeichnet, dass** die mit dem Füllstand des Speicherbereiches (4) heb- und senkbare Isolationsschicht (3) höhenverstellbar am Becken (1) gelagert ist und die Speicherflüssigkeit (2) flüssigkeitsdicht von einer oberhalb der Isolationsschicht (3) angeordneten, mit der Isolationsschicht heb- und senkbaren Nutzschicht so trennt, dass die Isolationsschicht (3) immer sowohl mit der Speicherflüssigkeit (2) als auch mit der Nutzschicht in unmittelbarem Kontakt steht.

2. Vorrichtung nach Anspruch 1, **dadurch gekennzeichnet, dass** die Nutzschicht ein Gewässer (6) ist.

3. Vorrichtung nach Anspruch 1, **dadurch gekennzeichnet, dass** im Bereich der Lagerung der Isolationsschicht (3) eine Entlüftung (11) für den Speicherbereich (4) vorgesehen ist.

4. Vorrichtung nach Anspruch 2 oder 3, **dadurch gekennzeichnet, dass** oberhalb der Isolationsschicht (3) ein Gewässerzufluss (7) vorgesehen ist.

5. Vorrichtung nach einem der Ansprüche 2 bis 4, **dadurch gekennzeichnet, dass** an einer vorgegebenen Beckenhöhe ein Gewässerüberlauf (8) vorgesehen ist.

6. Vorrichtung nach einem der Ansprüche 1 bis 4, **dadurch gekennzeichnet, dass** die Isolationsschicht (3) über eine Faltenbalgkonstruktion (5) höhenverstellbar am Becken (1) gelagert ist.

7. Vorrichtung nach einem der Ansprüche 1 bis 5, **dadurch gekennzeichnet, dass** die Isolationsschicht (3) einzelne Module (13) aufweist, die einen mit einem Dämmmaterial verfüllten Rahmen umfassen.

8. Verfahren zur Herstellung einer Vorrichtung nach Anspruch 7, **dadurch gekennzeichnet, dass** das Becken (1) mit einer Flüssigkeit befüllt wird, auf deren Flüssigkeitsoberfläche die miteinander verbundenen Module (13) der Isolationsschicht (3) aufgebracht werden, wonach die Flüssigkeitsoberfläche auf die Höhe des Speicherbereichs (4) abgesenkt, die Isolationsschicht (3) höhenverstellbar am Becken (1) gelagert und der Beckenbereich oberhalb der Isolationsschicht (1) unter Ausbildung einer Nutzschicht befüllt wird.

## Claims

1. Device for storing thermal energy with a basin (1) that has a storage area (4) filled with a storage fluid (2) and covered with an insulation layer (3), **characterized in that** the insulation layer (3), which can be raised and lowered with the fill level of the storage area (4), is mounted on the basin (1) in a height-adjustable manner and separates the storage fluid (2) in a liquid-tight manner from a use-layer arranged above the insulation layer (3) and capable of being raised and lowered with the insulation layer, in such a way that the insulation layer (3) is always in direct contact with both the storage fluid (2) and the use-layer.

2. Device according to claim 1, **characterized in that** the use-layer is a body of water (6).

3. Device according to claim 1, **characterized in that** a vent (11) for the storage area (4) is provided in the region where the insulation layer (3) is mounted.

4. Device according to claim 2 or 3, **characterized in that** a water inflow (7) is provided above the insulation layer (3).

5. Device according to one of claims 2 to 4, **characterized in that** a water overflow (8) is provided at a predetermined basin height.

6. Device according to one of claims 1 to 4, **characterized in that** the insulation layer (3) is mounted on the basin (1) in a height-adjustable manner via a bellows construction (5).

7. Device according to one of claims 1 to 5, **characterized in that** the insulation layer (3) has individual modules (13), which comprise a frame filled with an insulating material.

8. Method for manufacturing a device according to claim 7, **characterized in that** the basin (1) is filled with a liquid, onto the surface of which the interconnected modules (13) of the insulation layer (3) are applied, after which the liquid surface is lowered to the height of the storage area (4), the insulation layer (3) is mounted on the basin (1) in a height-adjustable manner, and the basin area above the insulation layer (1) is filled to form a use-layer.

## Revendications

1. Dispositif pour stocker de l'énergie thermique, comprenant un bassin (1) qui présente une zone de stockage (4) remplie d'un liquide de stockage (2) et recouverte d'une couche isolante (3), **caractérisé en ce que** la couche isolante (3), qui peut être relevée et abaissée en fonction du niveau de remplissage de la zone de stockage (4), est disposée de manière réglable en hauteur sur le bassin (1) et sépare le liquide de stockage (2) de manière étanche à l'aide d'une couche utile disposée au-dessus de la couche isolante (3) et pouvant être relevée et abaissée avec la couche isolante, de telle sorte que la couche isolante (3) soit toujours en contact direct avec le liquide de stockage (2) et avec la couche utile.

2. Dispositif selon la revendication 1, **caractérisé en ce que** la couche utile est un plan d'eau (6).

3. Dispositif selon la revendication 1, **caractérisé en ce qu'**une ventilation (11) est prévue pour la zone de stockage (4) dans la zone de support de la couche isolante (3).

4. Dispositif selon la revendication 2 ou 3, **caractérisé en ce qu'**un apport d'eau (7) est prévu au-dessus de la couche isolante (3).

5. Dispositif selon l'une des revendications 2 à 4, **caractérisé en ce qu'**un trop-plein (8) est prévu à une hauteur prédéfinie du bassin.

6. Dispositif selon l'une des revendications 1 à 4, **caractérisé en ce que** la couche isolante (3) est montée sur le bassin (1) de manière réglable en hauteur grâce à une structure à soufflet (5).

7. Dispositif selon l'une des revendications 1 à 5, **caractérisé en ce que** la couche isolante (3) comporte des modules individuels (13) qui comprennent un cadre rempli d'un matériau isolant.

8. Procédé de fabrication d'un dispositif selon la revendication 7, **caractérisé en ce que** le bassin (1) est rempli d'un liquide, sur la surface duquel sont appliqués les modules (13) reliés entre eux de la couche isolante (3), après quoi la surface du liquide est abaissée à la hauteur de la zone de stockage (4), la couche isolante (3) est disposée de manière réglable en hauteur sur le bassin (1) et la zone du bassin au-dessus de la couche isolante (1) est remplie en formant une couche utile.
